# EUROPÄISCHE PATENTANMELDUNG

(11) **EP 3 031 672 A2**
(43) Veröffentlichungstag der Anmeldung: **15.06.2016**
(21) Anmeldenummer: 15466016.1
(22) Anmeldetag: 08.12.2015
(51) Int. Cl.: B60R 16/02

(54) **KABELSATZBEFESTIGUNG IN DER FAHRZEUGSTOSSSTANGE**

(30) Priorität: 09.12.2014 CZ 20140876
(71) Anmelder: Skoda Auto A.S., 293 60 Mladá Boleslav (CZ)
(72) Erfinder: Knauer, Milan, CZ-506 01 Jicín (CZ)

(57) **Zusammenfassung**

Kabelsatzbefestigung, bzw Aufnahme (1) eines Kabelstranges (3) angeordnet an der Innenseite des Stoßfängers (2) des Fahrzeuges und ausgebildet zur Fixierung des Kabelstranges (3) zur Stromversorgung von einem im Stoßfänger integrierten Verbrauchsgerät.

Die Darstellung der Erfindung liegt darin, dass die Aufnahme (1) mindestens durch eine am Stoßfänger (2) einteilig ausgebildete Klemme (4) gebildet wird. Die Klemme (4) besteht aus einem Grundkörper (5) und einem Fixierabschnitt (6), der formschlüssig mit der äußeren Oberfläche des Kabelstranges (3) zusammenpasst. Die Aufnahme (1) ist einteilig mit dem Stoßfänger (2) in der Druckgussform durch die Einspritzung des thermoplastischen Materials (2) gefertigt.

## Beschreibung

### Technisches Gebiet

Die Erfindung betrifft eine Kabelsatzbefestigung, bzw. eine Aufnahme des Kabelstranges an der Innenseite der Stossstange, bzw. des Stoßfängers eines Fahrzeuges, wobei der Kabelstrang zur Stromversorgung von einem, eventuell mehreren im Stoßfänger angeordneten elektrischen Verbrauchsgeräten dient.

### Bisheriger Stand der Technik

Im Dokument DE102007009437A1 ist eine Halteplatte mit integriertem Kabelhalter an einer Stoßfängerverkleidung beschrieben. Das Dokument beschreibt eine Stoßfängerverkleidung, an der eine Halteplatte zur Aufnahme eines Anbauteils befestigt ist. Dieses Anbauteil ist über das elektrische Kabel an eine Vorrichtung außerhalb der Stoßfängerverkleidung angeschlossen und fixiert mit zugeordneten Kabelhaltern dieses Kabel. Der Kabelhalter beinhaltet eine Kabelaufnahme, die mindesten aus zwei Laschen besteht. Zwischen die Laschen ist das Kabel einklemmbar.

Der Nachteil dieser Lösung liegt darin, dass das Kabel zum Stoßfänger mittels eines Zwischenstücks, repräsentiert durch den Kabelhalter mit integrierten Laschen, fixiert wird. Durch die Anwendung dieses zusätzlichen Kabelhalters wird die eigentliche Kabelaufnahme am Stoßfänger unnütz verteuert.

### Darstellung der Erfindung

Erfindungsgemäß wird diese Aufgabe dadurch gelöst, dass die Aufnahme des Kabels nach Anspruch 1 an dem Stoßfänger des Fahrzeuges angeordnet und ohne Verwendung eines zusätzlichen Hilfshalter ausgebildet ist. Die Kabelaufnahme ist an der Innenseite des Stoßfängers des Fahrzeuges angeordnet und dient zur Fixierung des Kabels. Der Kabelstrang dient hier zur Stromversorgung von einem eventuell mehreren im Stoßfänger integrierten elektrischen Verbrauchsgeräten.

Die Darstellung der Erfindung liegt darin, dass die Aufnahme des Kabelstranges mindestens durch eine am Stoßfänger einteilig ausgebildete Klemme gebildet wird. Die Klemme besteht aus einem Grundkörper und einem Fixierabschnitt. Der Fixierabschnitt der Klemme passt formschlüssig mit der äußeren Oberfläche des Kabelstranges zusammen. Der Grundkörper der Klemme kann ebenfalls formschlüssig mit der seitlichen Oberfläche des Kabelstranges zusammenpassen. Die Klemme hat in einer vorteilhaften Ausführung die Form des Buchstaben L oder eines Hakens.

Die einteilige Ausführung der Aufnahme des Kabelstranges wird bei der Herstellung der eigentlichen Stoßstange erzielt und zwar so, dass die Stoßstange durch die Einspritzung des thermoplastischen Materials in der Druckgussform mitsamt der Aufnahme des Kabelstranges gefertigt wird.

### Übersicht der Figuren der Zeichnungen

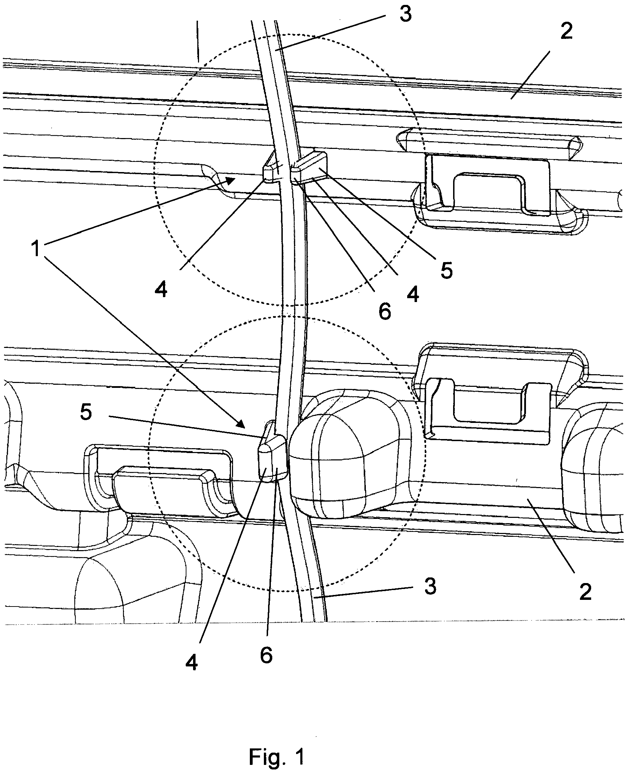

Die Fig. 1 zeigt ein Detail des Stoßfängers mit dargestellter Aufnahme des Kabelstranges an der Innenseite des Stoßfängers des Fahrzeuges.

### Ausführungsbeispiele der Erfindung

Die Fig. 1 zeigt im oberen Abschnitt das erfindungsgemäße Ausführungsbeispiel, wo an der Innenseite des Stoßfängers 2 eine Aufnahme 1 zur Fixierung des Kabelstranges 3 ausgebildet ist. Der Kabelstrang dient hier zur Stromversorgung von einem eventuell mehreren im Stoßfänger integrierten elektrischen Verbrauchsgeräten. Die Aufnahme 1 wird durch zwei Klemmen 4 gebildet. Die Klemme 4 besteht aus einem Grundkörper 5 und einem Fixierabschnitt 6. Der Fixierabschnitt 6 der Klemme 4 passt formschlüssig mit der äußeren Oberfläche des Kabelstranges 3 zusammen, d.h. er liegt dicht zur äußeren Oberfläche des Kabelstranges 3 an. Der Grundkörper 5 der Klemme 4 kann ebenfalls formschlüssig mit der Seite des Kabelstranges 3 zusammenpassen. Dadurch wird die Bewegung des Kabelstranges 3 in der Aufnahme 1 eingeschränkt.

In einem im unteren Abschnitt der Fig. 1 dargestellten weiterführenden Ausführungsbeispiel ist die Aufnahme 1 nur durch eine Klemme 4 gebildet. Als zweite Stützfläche wird hier vorteilhaft ein anderes Bauteil oder eine für andere Zwecke dienende Verprägung. In diesem Fall ist der Fixierabschnitt 6 der Klemme 4 länger, damit sich der Kabelstrang 3 aus der Aufnahme 1 nicht lösen kann. Die Klemme 4 hat in dieser Ausführung die Form des Buchstaben L.

### Verwendete Bezeichnungen

- 1: Aufnahme eines Kabelstranges im Stoßfänger eines Kraftfahrzeuges
- 2: Stoßfänger eines Fahrzeuges
- 3: Kabelstrang
- 4: Klemme der Aufnahme des Kabelstranges
- 5: Grundkörper der Klemme
- 6: Fixierabschnitt der Klemme

## Patentansprüche

1. Aufnahme (1) eines Kabelstranges (3) angeordnet an der Innenseite des Stoßfängers (2) des Fahrzeuges und ausgebildet zur Fixierung des Kabelstranges (3) zur Stromversorgung von einem im Stoßfänger (2) integrierten Verbrauchsgerät, **dadurch gekennzeichnet, dass** die Aufnahme (1) mindestens durch eine am Stoßfänger (2) einteilig ausgebildete Klemme (4) gebildet wird.

2. Aufnahme (1) nach vorgenanntem Anspruch **dadurch gekennzeichnet, dass** die Klemme (4) aus einem Grundkörper (5) und einem Fixierabschnitt (6) besteht, der formschlüssig mit der äußeren Oberfläche des Kabelstranges (3) zusammenpasst.

3. Aufnahme (1) nach vorgenannten Ansprüchen **dadurch gekennzeichnet, dass** die Klemme (4) die Form des Buchstaben L oder eines Hakens aufweist.

4. Aufnahme (1) nach vorgenannten Ansprüchen **dadurch gekennzeichnet, dass** die Aufnahme (1) einteilig mit dem Stoßfänger (2) in der Druckgussform durch die Einspritzung des thermoplastischen Materials gefertigt wird.
